# EUROPÄISCHE PATENTSCHRIFT

(11) **EP 0 846 917 B1**
(45) Veröffentlichungstag und Bekanntmachung des Hinweises auf die Patenterteilung: **28.05.2003**
(21) Anmeldenummer: 97120648.7
(22) Anmeldetag: 25.11.1997
(51) Int. Cl.: F23G 5/027, F23G 5/46

(54) **Verfahren und Vorrichtung zur Erzeugung und Nutzung von Gas aus Abfallstoffen**
Process and apparatus for the production and use of a gas from waste products
Procédé et appareil pour la production de gaz et l'utilisation d'un gaz à partir de déchets

(30) Priorität: 03.12.1996 DE 19650119
(43) Veröffentlichungstag der Anmeldung: 10.06.1998
(73) Patentinhaber: MARTIN GmbH für Umwelt- und Energietechnik, 80807 München (DE)
(72) Erfinder: Martin, Johannes Josef Edmund, Dipl.-Ing., 81929 München (DE); Busch, Michael, Dipl.-Ing., 83026 Rosenheim (DE)
(74) Vertreter: Zmyj, Erwin, Dipl.-Ing., Dipl.-Wirtsch.-Ing.

(56) Entgegenhaltungen:
- EP-A- 0 621 448
- EP-A- 0 767 342
- DE-A- 3 915 992
- DE-C- 4 337 421
- DE-U- 8 328 491
- US-A- 4 452 152
- PATENT ABSTRACTS OF JAPAN vol. 008, no. 148 (M-308), 11. Juli 1984 & JP 59 044513 A (HITACHI ZOSEN KK), 13. März 1984

## Beschreibung

Die Erfindung bezieht sich auf ein Verfahren und eine Vorrichtung zur Erzeugung und Nutzung von Gas aus Abfallstoffen, bei dem die Abfallstoffe längs eines Rostes in einer Feuerungsanlage gefördert und dabei mit Verbrennungsluft beaufschlagt werden.

Aus der DE 42 20 265 C1 ist ein Verfahren dieser Art bekannt, bei welchem die Abfallstoffe der Reihe nach eine Trocknungszone, eine Schwelzone, eine Reduktionszone und eine Oxidationszone durchlaufen, um gegen Ende des Rostes eine Verbrennung und Koksbildung zu erzielen. Hierbei tritt die Bildung großer Schlackenteile auf, die durch entsprechend stark dimensionierte Brecherwalzen gebrochen werden muss. Die für den Vergasungsvorgang notwendige Energie wird dabei durch die am Ende des Rostes eintretende Verbrennung über die zum größten Teil oberhalb des Rostes eingeführte Verbrennungsluft durch Konvektion und Strahlung auf die Abfallstoffe übertragen. Die erfordert einen besonders starken Verbrennungsvorgang am Ende des Rostes mit entsprechender Koksund Schlackenbildung.

Aus der EP 0 621 448 A1 ist eine Vorrichtung zur Durchführung eines Verbrennungsverfahrens bekannt, die eine Brennstoffaufgabe, einen Rost mit in Längsrichtung gegebenenfalls auch in Querrichtung unterteilten Unterwindkammern und einen Schlackenaustrag aufweist, bei der die Unterwindkammern mit Leitungen zur Zuführung von zusätzlichem Sauerstoff zur Verbrennungsluft versehen sind. Diese zusätzliche Sauerstoffzuführung ist vorgesehen, um eine Steigerung der Verbrennungsintensität auf dem gesamten Feuerungsrost zu erzielen, worauf dann in der Sekundär-Verbrennungszone die Verbrennung wieder gedrosselt wird. Von dieser Vorrichtung geht die Vorrichtung zur Durchführung des nachstehend beschriebenen Verfahrens aus.

Aufgabe der Erfindung ist es, einen stabilen Vergasungsprozess bei geringeren Temperaturen und damit unter Vermeidung von Pyrolysekoks in der Schlacke bei Vermeidung einer starken Schlackebildung einen guten Reststoffausbrand zu erzielen.

Diese Aufgabe wird ausgehend von einem Verfahren der eingangs erläuterten Art erfindungsgemäß dadurch gelöst, dass mindestens in Längsrichtung des Rostes angeordnete Unterwindkammern derart mit Verbrennungsluft beaufschlagt werden, dass die Abfallstoffe im Aufgabenbereich des Rostes bei überstöchiometrischer Sauerstoffzuführung entflammt werden und dass in Richtung des Schlackenaustrages die Verbrennung auf ein unterstöchiometrisches Maß begrenzt sind wird, welches für die Vergasung der brennbaren Bestandteile erforderlich ist sowie von einer Vorrichtung mit den Merkmalen des Anspruchs 12.

Bei diesem Verfahren wird die zur Vergasung notwendige Energie nicht durch eine übermäßig starke Verbrennung am Schluss des Feuerungsrostes und damit durch Aufheizen der Verbrennungsluft und durch Strahlungsenergie aus dem durch diese Verbrennung aufgeheizten Deckenbereich von außen zugeführt, sondern diese Vergasungsenergie entsteht aus der Verbrennung der Abfallstoffe, die kontinuierlich im Aufgabenbereich des Rostes bei überstöchiometrischen Verhältnissen entflammt und dann bei einem unterstöchiometrischen Verhältnis weiterverbrannt werden. Hierdurch ist eine stets ausreichende Energiezufuhr vorhanden, die einen stabilen Verbrennungsprozess ermöglicht, der zu einem guten Ascheausbrand und zur Vermeidung von Pyrolysekoks im verbleibenden Rest führt. Da die notwendige Energie aus dem Brennstoff heraus aufgrund seiner Entflammung entsteht und nicht von außen auf die Abfallstoffe übertragen werden muss, ergibt sich ein besserer Wirkungsgrad, wodurch nicht mehr soviel Abfallstoffe zur Energieerzeugung für den Vergasungsprozess verbrannt werden müssen, wodurch eine größere Menge von nutzbarem Gas erzeugt werden kann.

Diese vorteilhaften Wirkungen werden noch nach einer Weiterbildung der Erfindung dadurch gesteigert, dass nach dem Entflammen der Abfallstoffe der Vergasungsluft Sauerstoff bei unterstöchiometrischem Niveau beigemischt wird.

Der Vorteil dieser Maßnahme liegt darin, dass die Menge an Vergasungsluft und damit die Menge des als Ballaststoff wirkenden Stickstoffs sehr stark verringert werden kann, was zu mehreren Vorteilen führt. Einer der Vorteile besteht darin, dass aufgrund der geringeren Vergasungsluftmenge die Strömungsgeschwindigkeit durch das Bett der Brennstoffmasse abgesenkt wird, was zu einer merklichen Senkung des Flugstaubstromes führt. Ein weiterer erheblicher Vorteil besteht darin, dass durch die Absenkung des Stickstoffanteiles die Entstehung von Stickoxiden vermindert wird. Weiterhin steht für die Vergasung eine größere Energiemenge zur Verfügung, da nicht mehr soviel Stickstoff, der ausschließlich als Ballaststoff in der Vergasungsluft vorhanden ist, aufgeheizt werden muss.

Die Vergasung wird dabei vorzugsweise so durchgeführt, dass die Vergasungstemperatur der zu vergasenden Abfallstoffe bei 600 bis 850°C liegt und die Luftzahl zur Erzielung einer unterstöchiometrischen Vergasung 0,4 bis 0,8 beträgt.

Die Nutzung der erzeugten Gase kann in vielfältiger Weise erfolgen, Vorzugsweise ist vorgesehen, dass zur Nutzung der erzeugten Gase in einer zweiten Feuerungsanlage, die sich direkt oder über einen Abgaszug an die erste Feuerungsanlage anschließt, ausschließlich die aus der ersten Feuerungsanlage kommenden, brennbaren Bestandteile verbrannt werden. Diese Verfahrensweise hängt in erster Linie vom Sauerstoffgehalt und von dem Heizwert der aus der ersten Feuerungsanlage kommenden Gase ab.

Wenn der Sauerstoffgehalt in den aus der ersten Feuerungsanlage kommenden Abgasen nicht genügend hoch ist, wird man in vorteilhafter Weise zur Erzielung einer vollständigen Verbrennung dem aus der ersten Feuerungsanlage kommenden Abgas Verbrennungsluft in Form von Umgebungsluft zuführen.

Reicht dagegen der Heizwert dieser Gase nicht aus, um die notwendige Verbrennung bei höherer Temperatur durchführen zu können, so kann in Weiterbildung der Erfindung in der zweiten Feuerungsanlage den brennbaren Bestandteilen in Abhängigkeit von deren Heizwert neben der Verbrennungsluft ein höherwertiges, brennbares Gas zugeführt werden.

Zur Erzielung höherer Verbrennungstemperaturen in der zweiten Feuerungsanlage als dies mit Umgebungsluft möglich wäre, ist es vorteilhaft, wenn in Weiterbildung der Erfindung der Verbrennungsluft für die zweite Feuerungsanlage und/oder dem höherwertigen brennbaren Gas Sauerstoff beigemischt wird. Die Zuführung von Sauerstoff zusätzlich zur Verbrennungsluft hat den Vorteil, dass die Menge der zuzuführenden Verbrennungsluft geringer gehalten werden kann, wodurch die Abgasmenge aus der zweiten Feuerungsanlage geringer gehalten werden kann.

Ist genügend Sauerstoff in dem aus der ersten Feuerungsanlage kommenden Abgas vorhanden und ist auch der Heizwert hoch genug, so kann zur Regelung der Verbrennung in der zweiten Feuerungsanlage Abgas zum Vermischen und Ausbrennen der Gase zugeführt werden, welches dem Abgasstrom nach einer Abkühlung in einem Abhitzesystem entnommen wird. Diese Verfahrensweise hat den Vorteil, dass eventuell noch brennbare Gase, die die zweite Feuerungsanlage verlassen, zusätzlich verbrannt werden und außerdem wird die Abgasmenge gegenüber der Verfahrensweise, bei der ein höherwertiges, brennbares Gas zugeführt wird, abgesenkt.

Die Verbrennung in der zweiten Feuerungsanlage wird durch Auswahl der weiter oben beschriebenen Maßnahmen vorzugsweise so durchgeführt, dass in der zweiten Feuerungsanlage die Luftzahl 1,1 bis 1,8 beträgt. Die Verbrennungstemperatur der Gase in der zweiten Feuerungsanlage liegt bei 950 bis 1.250°C.

Die Vorrichtung zur Durchführung des Verfahrens mit einer eine Brennstoffaufgabe, einen Rost mit in Längsrichtung gegebenenfalls auch in Querrichtung unterteilten Unterwindkammern und einen Schlackenaustrag umfassende Feuerungsanlage, bei der die Unterwindkammern mit Leitungen zur Zuführung von Sauerstoff versehen sind, ist dadurch gekennzeichnet, dass eine zweite Feuerungsanlage direkt oder über einen Abgaskanal mit der ersten Feuerungsanlage verbunden ist.

Die Anordnung von Leitungen zur Zuführung von Sauerstoff ermöglicht eine feinfühlige Regelung der Vergasung bei geringeren Abgasmengen gegenüber der ausschließlichen Verwendung von Umgebungsluft. Weiterhin wird die Nutzung der erzeugten Gase durch Verbrennung in der zweiten Feuerungsanlage vorgesehen. Hierdurch erfolgt keine wesentliche Abkühlung der brennbaren Gase, die in der ersten Feuerungsanlage entstehen und die Verbrennung in der zweiten Feuerungsanlage kann deshalb bei verhältnismäßig geringer Luftüberschusszahl in vielen Fällen sogar ohne zusätzlichen Energieträger bei so hohen Temperaturen durchgeführt werden, dass sämtliche organische Bestandteile des brennbaren Gases abgebaut werden können, ohne dass die Neigung zur Bildung von Stickoxiden gefördert wird, da die Temperatur in der zweiten Verbrennungsanlage auf einem Niveau gehalten wird, welches unterhalb einer kritischen Temperaturgrenze liegt, ab der die Bildung von Stickoxiden in verstärktem Maße eintritt.

Um die vorteilhaften Weiterbildungen des Verfahrens durchführen zu können, ist in weiterer Ausgestaltung der Vorrichtung vorgesehen, dass die zweite Feuerungsanlagen mit mindestens einer Leitung für die Zuführung von Verbrennungsluft, mit mindestens einer Leitung für die Zuführung eines höherwertigen brennbaren Gases oder mit mindestens einer Leitung für die Zuführung von rezirkuliertem Abgas versehen ist. Diese drei Maßnahmen können wahlweise einzeln oder gemeinsam vorgesehen sein, was von der Art der Durchführung des Verfahrens abhängt.

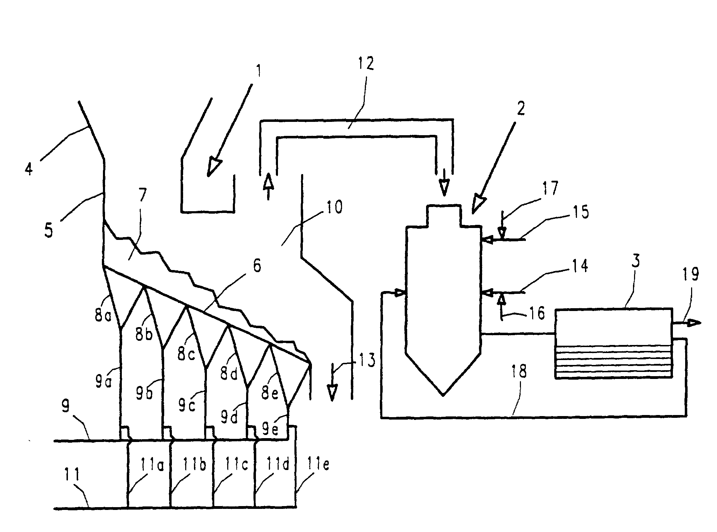

Die Erfindung wird nachfolgend anhand eines in der Zeichnung dargestellten Ausführungsbeispieles näher erläutert, deren einzige Figur eine schematische Darstellung einer Feuerungsanlage mit einer angeschlossenen zweiten Feuerungsanlage zeigt.

Wie aus der Zeichnung ersichtlich, umfasst die Vorrichtung zur Durchführung des Verfahrens im wesentlichen eine insgesamt mit 1 bezeichnete Feuerungsanlage, wie sie bisher zur Müllverbrennung zum Einsatz kommt in Verbindung mit einer zweiten, als Nachbrennkammer dienenden Feuerungsanlage 2, welcher ein Wärmetauscher 3 nachgeschaltet ist. Die weiterhin noch notwendigen Einrichtungen, insbesondere zur Abgasreinigung, sind in dieser Zeichnung nicht dargestellt, da sie bei Feuerungsanlagen zum Stande der Technik gehören und für die Erläuterung der Erfindung entbehrlich sind.

Die erste Feuerungsanlage 1 umfasst einen Aufgabetrichter 4 mit anschließender Aufgabeschurre 5, über die die zu verbrennenden Abfallstoffe auf einen Feuerungsrost 6 gelangen, wobei die Abfallstoffe auf dem Feuerungsrost 6 mit 7 bezeichnet sind. Unterhalb des Feuerungsrostes 6 sind einzelne Unterwindkammern 8a bis 8e vorgesehen, über die Luft aus einer Zuführungsleitung 9 über Leitungen 9a bis 9e zugeführt wird. Diese gelangt durch den Rost 6 hindurch in den Brennraum 10. Über die Unterwindkammern 8a und 8b wird Verbrennungsluft gegebenenfalls gemischt mit Sauerstoff zugeführt, um die Abfallstoffe in einer überstöchiometrischen Atmosphäre zu entflammen. Nach dieser Anfangsphase der Entflammung wird über die Unterwindkammern 8c bis 8e dem Rost Luft als Vergasungsluft vorzugsweise gemischt mit Sauerstoff zugeführt, wobei die Menge an Vergasungsluft und die Menge an Sauerstoff so eingestellt wird, dass die Vergasung unterstöchiometrisch mit einer Luftzahl von λ = 0,4 bis 0,8 erfolgt. Die Zuführung von Sauerstoff zu den einzelnen Unterwindkammern erfolgt über die Leitungen 11a bis 11e, die von einer gemeinsamen Leitung 11 gespeist werden und in die Leitungen 9a bis 9e einmünden. Zur Regelung der jeweiligen Mengen sind sowohl die Leitungen 9a bis 9e als auch die Leitungen 11a bis 11e mit nicht dargestellten Ventilen versehen. Die zusätzliche Zuführung von Sauerstoff führt also nicht nur zu einer Erhöhung des Sauerstoffanteiles der zugeführten Luft, sondern gleichzeitig auch zu einer Verringerung des Stickstoffanteiles. Die Vergasung wird dabei so durchgeführt, dass sich Temperaturen zwischen 600 und 850°C einstellen. Das dabei erzeugte, brennbare Gas wird über einen Abgaszug 12, der von der Feuerungsanlage ausgeht, praktisch ohne Wärmeverlust der zweiten Feuerungsanlage 2 zugeführt, die als Nachbrennkammer ausgebildet ist. Die bei der Vergasung angefallene Schlacke verlässt die Feuerungsanlage über einen Schlackenaustrag 13.

In der zweiten Feuerungsanlage 2 wird durch Zuführung von Verbrennungsluft über eine Leitung 14 eine Luftüberschusszahl von 1,1 bis 1,8, vorzugsweise von 1,2 eingestellt. Die dabei auftretenden Temperaturen liegen im Bereich zwischen 950 und 1.250°C. Sofern das zu verbrennende Gas aus der ersten Feuerungsanlage 1 einen zu geringen Heizwert aufweist, ist eine weitere Leitung 15 für die Zuführung von hochwertigem brennbaren Gas, beispielsweise Erdgas vorgesehen. Sowohl in die Leitung 14 für Verbrennungsluft als auch in die Leitung 15 für höherwertiges Gas kann jeweils eine Leitung 16 bzw 17 für zusätzlichen Sauerstoff einmünden. Eine weitere Leitung 18 kann vorgesehen sein, um rezirkuliertes Abgas in die zweite Feuerungsanlage 2 einzuführen, wobei dieses rezirkulierte Abgas nach Durchströmen des Wärmetauschers 3 auf eine Temperatur von unterhalb 300°C abgekühlt ist. Dieses rezirkulierte Abgas dient zur starken Durchmischung des brennbaren Gases in der zweiten Feuerungsanlage 2, wodurch vermieden wird, dass zuviel Verbrennungsluft zugeführt wird, die für eine Turbulenzerzeugung notwendig wäre und die die Abgasmenge und auch die sich in der zweiten Feuerungsanlage einstellende Temperatur erhöhen würde. Dabei können auch noch in diesem Abgas vorhandene brennbare Anteile verbrannt werden. Die aus dem Wärmetauscher 3 kommenden Gase werden über eine Leitung 19 einer Abgasreinigungsanlage zugeführt, die nicht dargestellt ist, weil sie nicht Gegenstand der Erfindung und allgemein bekannt ist.

## Patentansprüche

1. Verfahren zur Erzeugung und Nutzung von Gas aus Abfallstoffen, bei dem die Abfallstoffe längs eines Rostes in einer Feuerungsanlage gefördert und dabei mit Verbrennungsluft beaufschlagt werden, **dadurch gekennzeichnet, dass** mindestens in Längsrichtung des Rostes angeordnete Unterwindkammern derart mit Verbrennungsluft beaufschlagt werden, dass die Abfallstoffe im Aufgabebereich des Rostes bei überstöchiometrischer Sauerstoffzuführung entflammt werden und dass in Richtung des Schlackenaustrages die Verbrennung auf ein unterstöchiometrisches Maß begrenzt wird, welches für die Vergasung der brennbaren Bestandteile erforderlich ist.

2. Verfahren nach Anspruch 1**, dadurch gekennzeichnet, dass** nach dem Entflammen der Abfallstoffe der Vergasungsluft Sauerstoff bei unterstöchiometrischem Niveau beigemischt wird.

3. Verfahren nach Anspruch 1 oder 2, **dadurch gekennzeichnet, dass** die Vergasungstemperatur der zu vergasenden Abfallstoffe bei 600 bis 850°C liegt.

4. Verfahren nach einem der Ansprüche 1 bis 3, **dadurch gekennzeichnet, dass** die Luftzahl zur Erzielung einer unterstöchiometrischen Vergasung 0,4 bis 0,8 beträgt.

5. Verfahren nach einem der Ansprüche 1 bis 4, **dadurch gekennzeichnet, dass** zur Nutzung der erzeugten Gase in einer zweiten Feuerungsanlage, die sich direkt oder über einen Abgaszug an die erste Feuerungsanlage anschließt, ausschließlich die aus der ersten Feuerungsanlage kommenden brennbaren Bestandteile verbrannt werden.

6. Verfahren nach einem der Ansprüche 1 bis 5, **dadurch gekennzeichnet, dass** dem aus der ersten Feuerungsanlage kommenden Abgas Verbrennungsluft in Form von Umgebungsluft zugeführt wird.

7. Verfahren nach einem der Ansprüche 1 bis 6, **dadurch gekennzeichnet, dass** in der zweiten Feuerungsanlage den flüchtigen Bestandteilen in Abhängigkeit von deren Heizwert neben der Verbrennungsluft ein höherwertiges brennbares Gas zugeführt wird.

8. Verfahren nach Anspruch 7, **dadurch gekennzeichnet, dass** der Verbrennungsluft für die zweite Feuerungsanlage und/oder dem höherwertigen brennbaren Gas Sauerstoff beigemischt wird.

9. Verfahren nach einem der Ansprüche 1 bis 8, **dadurch gekennzeichnet, dass** in der zweiten Feuerungsanlage rezirkuliertes Abgas zum Vermischen und Ausbrennen der Gase zugeführt wird, welches dem Abgasstrom nach einer Abkühlung in einem Abhitzesystem entnommen wird.

10. Verfahren nach Anspruch 5 bis 9, **dadurch gekennzeichnet, dass** in der zweiten Feuerungsanlage die Luftzahl 1,1 bis 1,8 beträgt.

11. Verfahren nach einem der Ansprüche 5 bis 10, **dadurch gekennzeichnet, dass** die Verbrennungstemperatur in der zweiten Feuerungsanlage bei 950 bis 1.250° C liegt.

12. Vorrichtung zur Durchführung des Verfahrens nach einem der Ansprüche 1 bis 11 mit einer eine Brennstoffaufgabe (4, 5), einen Rost (6) mit in Längsrichtung ggf. auch in Querrichtung unterteilten Unterwindkammern (8a bis 8e) und einen Schlackenaustrag (13) umfassende Feuerungsanlage (1), bei der die Unterwindkammern (8a bis 8e) mit Leitungen (11a bis 11e) zur Zuführung von Sauerstoff versehen sind, **dadurch gekennzeichnet, dass** eine zweite Feuerungsanlage (2) direkt oder über einen Abgaskanal (12) mit der ersten Feuerungsanlage (1) verbunden ist.

13. Vorrichtung nach Anspruch 12, **dadurch gekennzeichnet, dass** die zweite Feuerungsanlage (2) mit mindestens einer Leitung (14) für die Zuführung von Verbrennungsluft versehen ist.

14. Vorrichtung nach Anspruch 12 oder 13, **dadurch gekennzeichnet, dass** die zweite Feuerungsanlage (2) mit mindestens einer Leitung (15) für die Zuführung eines höherwertigen, brennbaren Gases versehen ist.

15. Vorrichtung nach Anspruch 13, **dadurch gekennzeichnet, dass** in die Leitung (14) für die Verbrennungsluft eine Leitung (16) für die Zuführung von Sauerstoff einmündet.

16. Vorrichtung nach Anspruch 14, **dadurch gekennzeichnet, dass** in die Leitung (15) für ein höherwertiges, brennbares Gas eine Leitung (17) für die Zuführung von Sauerstoff einmündet.

17. Vorrichtung nach einem der Ansprüche 12 bis 16, **dadurch gekennzeichnet, dass** die zweite Feuerungsanlage (2) mit mindestens einer Leitung (18) für die Zuführung von rezirkuliertem Abgas versehen ist.

## Claims

1. Method for the generation and utilization of gas from waste materials, in which the waste materials are conveyed along a grate in a furnace installation and are at the same acted upon by combustion air, **characterized in that** underblast chambers arranged in the longitudinal direction of the grate are acted upon by combustion air in such a way that the waste materials are inflamed in the feed region of the grate, with oxygen being supplied at an above -stoichiometric value, and **in that**, in the direction of the slag discharge, combustion is limited to a below-stoichiometric value which is necessary for the gasification of the combustible constituents.

2. Method according to Claim 1, **characterized in that**, after the inflammation of the waste materials, oxygen is admixed at a below -stoichiometric level to the gasification air.

3. Method according to Claim 1 or 2, **characterized in that** the gasification temperature of the gas materials to be gasified is around 600 to 850°C.

4. Method according t o one of Claims 1 to 3, **characterized in that** the air ratio for achieving below-stoichiometric gasification is 0.4 to 0.8.

5. Method according to one of Claims 1 to 4, **characterized in that**, in order to utilize the generated gases in a second furnace installation which follows the first furnace installation directly or via an exhaust-gas flue, only the combustible constituents coming from the first furnace installation are burnt.

6. Method according to one of Claims 1 to 5, **characterized in that** combustion air in the form of ambient air is supplied to the exhaust gas coming from the first furnace installation.

7. Method according to one of Claims 1 to 6, **characterized in that**, in the second furnace installation, a higher -grade combustible gas is supplied, in addition to the combustion air, to the volatile constituents as a function of the calorific value of the latter.

8. Method according to Claim 7, **characterized in that** oxygen is admixed to the combustion air for the second furnace installation and/or to the higher -grade combustible gas.

9. Method according to one of Claims 1 to 8, **characterized in that**, in the second furnace installation, recirculated exhaust gas is supplied for intermixing and burning up the gases, the said exhaust gas being extracte d from the exhaust -gas stream after cooling in a waste-heat system.

10. Method according to Claims 5 to 9, **characterized in that**, in the second furnace installation, the air ratio is 1.1 to 1.8.

11. Method according to one of Claims 5 to 10, **characterized in that** the combustion temperature in the second furnace installation is around 950 to 1250°C.

12. Apparatus for carrying out the method according to one of Claims 1 to 11, with a furnace installation (1) which comprises a fuel feed (4, 5), a grate (6) with underblast chambers (8a to 8e) subdivided in the longitudinal direction and, if appropriate, also in the transverse direction, and a slag discharge (13) and in which the underblast chambers (8a to 8e) are provided with conduits (11a to 11e) for the s upply of oxygen, **characterized in that** a second furnace installation (2) is connected to the first furnace installation (1) directly or via an exhaust-gas duct (12).

13. Apparatus according to Claim 12, **characterized in that** the second furnace installatio n (2) is provided with at least one conduit (14) for the supply of combustion air.

14. Apparatus according to Claim 12 or 13, **characterized in that** the second furnace installation (2) is provided with at least one conduit (15) for the supply of a higher-grade combustible gas.

15. Apparatus according to Claim 13, **characterized in that** a conduit (16) for the supply of oxygen issues into the conduit (14) for the combustion air.

16. Apparatus according to Claim 14, **characterized in that** a conduit (17) for th e supply of oxygen issues into the conduit (15) for a higher -grade combustible gas.

17. Apparatus according to one of Claims 12 to 16, **characterized in that** the second furnace installation (2) is provided with at least one conduit (18) for the supply of recirculated exhaust gas.

## Revendications

1. Procédé pour la production et l'utilisation d'un gaz à partir de déchets, dans lequel les déchets sont transportés le long d'une grille dans une installation de chauffe et y sont alimentés en air de combustion, **caractérisé en ce que** des boîtes à vent inférieures disposées au moins dans le sens longitudinal de la grille sont alimentées en air de combustion de telle manière que les déchets soient enflammés dans la région de chargement de la grille sous une addition d'oxygène suprastoechiométrique et que la combustion soit limitée en direction de l'extraction de la scorie à une mesure sous-stoechiométrique, qui est nécessaire pour la gazéification des composants combustibles.

2. Procédé suivant la revendication 1, **caractérisé en ce que** de l' oxygène à un niveau sous-stoechiométrique est mélangé à l'air de gazéification après l'inflammation des déchets.

3. Procédé suivant la revendication 1 ou 2, **caractérisé en ce que** la température de gazéification des déchets à gazéifier vaut de 600 à 850°C.

4. Procédé suivant l'une quelconque des revendications 1 à 3, **caractérisé en ce que** l'excès d'air pour produire une gazéification sous-stoechiométrique vaut de 0,4 à 0,8.

5. Procédé suivant l'une quelconque des revendications 1 à 4, **caractérisé en ce que**, pour l'utilisation des gaz produits dans une seconde installation de chauffe, qui suit la première installation de chauffe soit directement soit par l'intermédiaire d'une canalisation de gaz brûlés, on brûle exclusivement les composants combustibles pro venant de la première installation de chauffe.

6. Procédé suivant l'une quelconque des revendications 1 à 5, **caractérisé en ce que** l'on ajoute aux gaz brûlés provenant de la première installation de chauffe de l'air de combustion sous la forme d'air atmosphérique.

7. Procédé suivant l'une quelconque des revendications 1 à 6, **caractérisé en ce que** l'on ajoute, dans la seconde installation de chauffe, en plus de l'air de combustion, un gaz combustible à haut pouvoir calorifique aux composants volatils, en fonction de leur pouvoir calorifique.

8. Procédé suivant la revendication 7, **caractérisé en ce que** l'on mélange de l'oxygène à l'air de combustion pour la seconde installation de chauffe et/ou au gaz combustible à haut pouvoir calorifique.

9. Procédé suivant l'une quelconque des revendications 1 à 8, **caractérisé en ce que** l'on ajoute dans la seconde installation de chauffe, pour le mélange et la combustion des gaz, des gaz brûlés recyclés qui sont prélevés dans le courant de gaz brûlés après un refroidissement dans un système de récupération de chaleur perdue.

10. Procédé suivant une des revendications 5 à 9, **caractérisé en ce que** l'excès d'air vaut de 1,1 à 1,8 dans la seconde installation de chauffe.

11. Procédé suivant l'une quelconque des revendications 5 à 10, **caractérisé en ce que** la température de combustion dans la seconde installation de chauffe vaut de 950 à 1250°C.

12. Dispositif pour la mise en oeuvre du procédé suivant l'une quelconque des revendications 1 à 11, avec une installation de chauffe (1) comprenant un chargeur de combustible (4, 5), une grille (6) avec des boîtes à vent inférieures (8a à 8e) réparties dans le sens longitudinal et le cas échéant également dans le sens transversal, et une extraction de scorie (13), dans lequel les boîtes à vent inférieures (8a à 8e) sont pourvues de conduites (11a à 11e) pour l'alimentation en oxygène, **caractérisé en ce qu'**une seconde installation de chauffe (2) est raccordée à la première installation de chauffe (1) soit directement soit par l'intermédiaire d'un canal de gaz brûlés (12).

13. Dispositif suivant la revendication 12, **caractérisé en ce que** la seconde installation de chauffe (2) est pourvue d'au moins une conduite (14) pour l'alimentation en air de combustion.

14. Dispositif suivant une revendication 12 ou 13, **caractérisé en ce que** la seconde installation de chauffe (2) est pourvue d'au moins une conduite (15) pour l'alimentation en un gaz combustible à haut pouvoir calorifique.

15. Dispositif suivant la revendication 13, **caractérisé en ce qu'**une conduite (16) pour l'alimentation en oxygène débouche dans la conduite (14) destiné à l'air de combustion.

16. Dispositif suivant la revendication 14, **caractérisé en ce qu'**une conduite (17) pour l'alimentation en oxygène débouche dans la conduite (15) destinée à un gaz combustible à haut pouvoir calorifique.

17. Dispositif suivant l'une quelconque des revendications 12 à 16, **caractérisé en ce que** la seconde installation de chauffe (2) est pourvue d'au moins une conduite (18) pour l'alimentation e n gaz recyclé.
